Europäisches Patentamt

(19) European Patent Office

Office européen des brevets

(11) Numéro de publication: **0 069 167**

A1

## (12) DEMANDE DE BREVET EUROPEEN

(21) Numéro de dépôt: 81105299.2

(22) Date de dépôt: 08.07.81

(51) Int. Cl.³: **A 61 C 13/26**

(43) Date de publication de la demande:
12.01.83 Bulletin 83/2

(84) Etats contractants désignés:
AT BE CH DE FR GB LI LU NL SE

(71) Demandeur: Maison TRE D Dental Dinamic Diffusion
Via Torleone, 21
I-40100 Bologna(IT)

(72) Inventeur: Gavioli, Carlo
Via Duse, 16
I-40127 Bologna(IT)

(74) Mandataire: Sassatelli, Franco
c/o INIP Ufficio Internazionale Brevetti per Deposito di
Brevetti e Marchi via Mazzini, 170
I-40139 Bologna(IT)

(54) Raccord pour prothèse.

(57) Un corps d'interposition (indice c) présentant une forme cylindrique et pouvant être introduit axialement dans un petit cylindre (indice b) inclus dans la prothèse est équipé d'une butée double (11c) précédée par un creux à collet (8c). La butée est déterminée par deux méplats (9c, 10c) symétriquement disposés pour permettre l'introduction du corps (c) jusqu'au bout de la course entre les branches d'un ressort à fourchette (4b) et son blocage par rotation sur 90° de la prothèse contenant ledit ressort à fourchette (4b).

FIG 4

EP 0 069 167 A1

- I -

"Raccord pour prothèse":

L'invention se réfère à un raccord pour prothèse opèrant avec embrayage coaxial et sans corps mobiles de blocage, réalisant de cette façon un appareil d'emploi aisé accorpé et sans parties sujettes à usure particulière dans les phases d'agibilité cotidienne du mécanisme.

La technique courante prévoit l'emploi, en support de dent d'arcade, de boucle pour stabiliser la prothèse. Le calque en résine inclut un corps saillant qu'on peut fixer de façon différentes à corps d'interposition à appliquer de façon autocentrante à la dite boucle soudée au moyen de capsule et ciment à la dent-pilier d'arcade. C'est bien connu que, pour les opérations traditionnelles de nettoyage, il faut chaque jour enlever la prothèse et que, à cet effet, il faut déclancher et ensuite appliquer les moyens articulés de blocage du corps d'interposition à celui de contention qui est prévu incorporé dans la prothèse.

Un mécanisme emploie un petit pivot opèrant avec un mouvement limité transversal qui bloque les deux parties glissantes; un autre système emploie un aileron avec mouvement roulant. On peut noter qu'il s'agit de parties soujettes à usure particulière et que, lorsque conséquemment elles ne résultent plus utilisables, pour enlever le corps d'enclenchement, il faut ôter une partie de résine dans le but de pouvoir atteindre la partie restante.

Le trouvé permet la solution du problème moyennant un système d'en clenchement autobloquant qui fonctionne sans moyens de blocage mo
biles. Cela est possible parce que le corps d'interposition, apte
pour être enclenché de façon autobloquante sur la boucle soudée à
la dente-pilote, présente une partie idéalement cylindrique axialement qu'on peut introduire dans un petit cylindre inclus dans la
prothèse et équipé avec le bout de blocage à double battant précé
dé par un creux à collet. La dite partie bloquante est déterminée
par deux émoussements symmetriques contreposées pour permettre son
introduction en un sens jusqu'au bout de la course entre les petites colonnes d'un ressort à fourchette et, en succession, le blo
cage du corps d'interposition par rotation de la prothèse de 90°
contenant le coaxial portant le ressort à fourchette ci-dessus.

En version de réalisation qu'on présente à titre d'exemple, le pro
cédé prévoit l'emploi de trois parties différentes dont la boucle
(a) à imposer solidaire sur la dent-pilier, le corps (b) consistant
en le petit cylindre coaxial portant le ressort à fourchette qu'on
peut incorporer dans la prothèse, et le corps axial (c) apte à être appliqué avec effect autocentrant sur la boucle (a) afin de
consentir le montage solidairement opérant de la prothèse au moyen
d'enclenchement jusqu'à la limite de course dans le coaxial de (c)
et rotation de 90° pour la condition de blocage.

La boucle est caractérisée par une petite base d'appui pour la ca
psule avec enveloppe sisissante 2a et base d'arrêt 3a. L'introduction autocentrante de la partie d'enclenchement du corps d'inter
position avec glissement sur plain est permise en creux 4a par les
plains de glissement parallèles 5a et 6a. L'appareil (b) prévoit
un petit cylindre coaxial à fond plat 2b et creux parallèles 3b
pour l'application à rétention du ressort à fourchette 4b.

Le corps d'interposition (c) est caractérisé par une fente intermé
diaire Ic pour déterminer les mi-parties à ressort 2c et 3c initia
les et terminales 4c et 5c à forme totale cylindrique pour le loge
ment en cavité 4a, au moyen de glissement des plains 6c et 7c sur

- 3 -

0069167

les plans de correspondance 5a et 6a. L'enclenchement jusqu'au bout de la course du corps d'interposition dans le cylindre Ib est permis par le creux à collet 8c et rétrécissements parallèles 9c et IOc qui permettent au battant avec alette double de rétention IIc de pénétrer par sa disposition avec émoussements orientés selon les petites colonnes de 3b directement entre elles.

Pour le montage, on procède au début à assembler la boucle (a) à la dent-pilote moyennant l'application de capsule et opération de cimentage. La dite boucle supporte le corps d'interposition (c) d'une façon solidairement opérante et avec absorption des contraintes au moyen du type d'enclenchement élastique avec mi-parties 2c 5c et 3c-4c opérantes à ressort d'expansion.

Pour l'application de la prothèse incorporant le corps (b), l'on procède à introduire (c) dans le cylindre Ib jusqu'à la fin de la course, et procédant ensuite au blocage moyennant la seule action de rotation à 90° de la partie axial on introduit ensuite le corps axial cylindrique 4c-5c dans le creux 4a en le portant en position par arrêt sur la petite base 3a. Pour détacher la prothèse on procède en opérant en soulèvement pour extraire 4c-5c du creux 4a.

Une forme d'actuation est présentée en version pas limitative par les croquis de la Table I, où la fig. I est la vue en section longitudinale des trois composants composés en phase d'introduction du corps d'interposition porté au bout de la course en condition de blocage. La fig. 2 est la section du même ensemble tourné de 90°. La fig. 3 est la section transversale du creux à collet 8c pour montrer la phase d'introduction du battant IIc entre les petites colonnes du ressort 3b. La fig. 4 est la vue prospectique des composants le systhème en position déclenchées. En pratique, les particuliersd'exécution des parties d'enclenchement et blocage, aussi bien que des ressorts, pourront être différents.

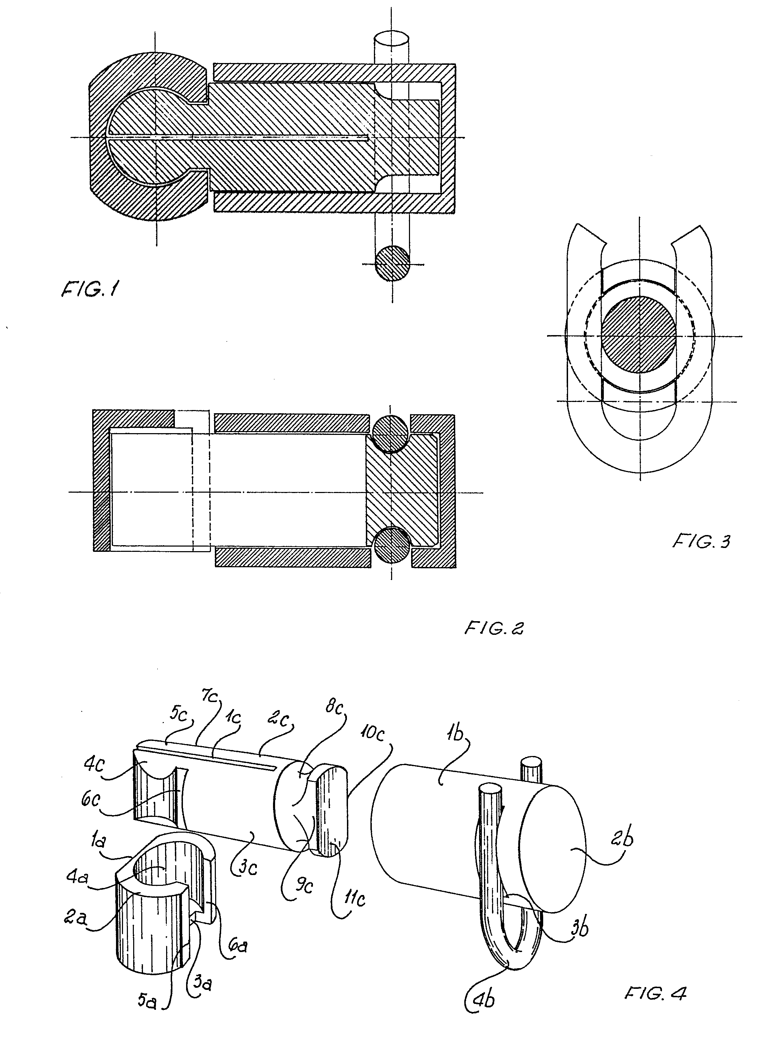

En particulier, l'emploi du ressort à fourchette 4b appliqué dans

- 4 -

0069167

les creux 3b de l'enveloppe de Ib permet d'opéerer une rétention élastique du corps (c) dans la cavité cylindrique, permettant ainsi son engagement et d'opérer en absorption des contraintes. Le corps d'interposition (c) connecte les corps (a) et (b) selon un couple d'articulation élastique qui, dans l'ensemble, opèrent à absorption de choc. Lorsque par suite d'usure, les composants 2c-3c et 4c-5c perdent leur élasticité et sont consommés, on peut procéder au remplacement du corps (c) par extraction et substitution avec un autre.

Revendications:

I) Raccord pour prothèse, caractérisé par le fait que le corps d'interposition (c) présente une forme idéalement cylindrique pour être introduite à glissement axial en un petit cylindre inclus dans la prothèse et est équipé avec bout de blocage à double battant précédé par un creux à collet. La dite partie bloquante est déterminée par deux émoussements symmétriques contreposés, pour consentir son introduction en un sens jusqu'au bout de la course entre les branches d'un ressort à fourchette et, successivement, le blocage du corps d'interposition par rotation à 90° de la prothèse contenant le dit ressort à fourchette en coaxial portant.

2) Raccord pour prothèse, selon la revendication précédente, caractérisé par le fait que, la bouble est caractérisée par une petite base d'appui Ia pour la capsule avec enveloppe saisissante 2a et base inférieure d'arrêt 3a. L'introduction aucentrante de la partie d'enclenchement du corps d'interposition avec glissement sur le plan est permise dans le creux 4a par les plans de glissement parallèles 5a et 6a. L'appareil (b) prévoit un petit cylindre coaxial avec fond plat 2b et avec les émoussements parallèles 3b pour l'application à retention du ressort à fourchette 4b. Le corps d'interposition est caractérisé par une fente intermédiaire Ic pour déterminer des mi-parties avec ressort 2c et 3c initiales et terminales 4c et 5c, avec forme cylindrique totale pour le logement en cavité 4a, moyennant glissement des plans 6c et 7c sur les plans de correspondance 5a et 6a.

3) Raccordement pour prothèse, selon les revendications précédentes, caractérisé par le fait que l'enclenchement jusqu'au bout de la course du corps d'interposition dans le petit cylindre Ib est permis par le creux à collet 8c et les émoussements parallèles 9c et IOc permettant au battant à double alette de retention IIc de pénétrer par sa disposition avec émoussement orientés selon les colonnes de 3b directement entre elle mêmes.

4) Raccord pour prothèse, selon les revendications précédentes, caractérisé par le fait que, pour le montage, on procède au début à assembler la boucle (a) à la dent-pilote moyennant application de capsule et opération de cimentage. La dite boucle supporte le corps d'interposition (c) de façon solidairement opérante et avec absorption des contraintes au moyen de type d'enclenchement avec mi-parties 2c-5c et 3c-4c opérantes par ressort d'expansion. Pour l'application de la prothèse incluant le corps (b), on procède à introduire (c) dans le petit cylindre Ib jusqu'au bout de la course en procédant ensuite au blocage moyennant la seule action de rotation à 90° de la partie axiale; puis l'on introduit le corps axial cylindrique 4c-5c dans la cavité 4a en le portant en position par arrêt sur la base 3a. Pour détacher la prothèse, on procède en opérant en soulèvement pour extraire 4c-5c de la cavité 4a.

5) Raccord pur prothèse, selon les revendications précédentes, caractérisé par le fait qui, l'emploi du ressort à fourchette 4b appliqué dans les émoussements 3b d'enveloppe de Ib, permet d'opérer une retention élastique du corps (c) dans la cavité cylindrique permettant ainsi son engagement et d'opérer en absorption des contraintes.

6) Raccord pour prothèse, selon les revendications précédentes caractérisé par le fait que le corps d'interposition (c) connecte les corps (a) et (b) selon un couple d'articulations élastiques qui, en total, opèrent en absorption de choc. Lorsque par usure le composants 2,c 3c, 4c, 5c perdent leur élasticité ou bien ils sont consommés, on peut procéder au remplacement du corps (c) au moyen de son extraction et la substitution avec un autre.

FIG.1

FIG.2

FIG.3

FIG.4

Office européen
des brevets

**RAPPORT DE RECHERCHE EUROPEENNE**

EP 81 10 5299.2

| | DOCUMENTS CONSIDERES COMME PERTINENTS | | CLASSEMENT DE LA DEMANDE (Int. Cl. ³) |
|---|---|---|---|
| Catégorie | Citation du document avec indication, en cas de besoin, des parties pertinentes | Revendication concernée | |
| Y | <u>FR - A - 1 134 137</u> (MORANDI) <br> * page 2, colonne de gauche, ligne 36 à colonne de droite, ligne 30; fig. 1, 2, 14, 15 * <br> -- | 1,2,4, 6 | A 61 C 13/26 |
| Y | <u>US - A - 3 858 322</u> (PADEH) <br> * résumé; fig. 2 à 5 * <br> -- | 1,3 | |
| A | <u>DE - C - 1 059 617</u> (LIPPARINI) <br> * colonne 3, ligne 35 à colonne 4, ligne 18 * <br> -- | 1 | **DOMAINES TECHNIQUES RECHERCHES (Int. Cl. ³)** |
| A | <u>FR - A1 - 2 274 269</u> (METAUX PRECIEUX S.A.) <br> -- | | |
| A | <u>DE - A - 1 806 364</u> (WÜHRER) <br> ---- | | A 61 C 13/00 |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

| X | Le présent rapport de recherche a été établi pour toutes les revendications | |
|---|---|---|
| Lieu de la recherche <br> Berlin | Date d'achèvement de la recherche <br> 19-02-1982 | Examinateur <br> SIMON |